Europäisches Patentamt

European Patent Office

Office européen des brevets

(19)

(11) Numéro de publication: **0 087 353**
**A1**

# (12) DEMANDE DE BREVET EUROPEEN

(21) Numéro de dépôt: **83400295.8**

(22) Date de dépôt: **11.02.83**

(51) Int. Cl.³: **C 21 B 13/00**
**C 21 B 5/00, C 22 B 5/10**
**C 10 L 5/44**

(30) Priorité: **12.02.82 FR 8202342**

(43) Date de publication de la demande:
**31.08.83 Bulletin 83/35**

(84) Etats contractants désignés:
**AT BE CH DE GB IT LI LU NL SE**

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06(FR)**

(72) Inventeur: **Schwob, Yvan, Alfred**
**22, rue Valéry**
**F-75116 Paris(FR)**

(74) Mandataire: **Chevallier, Robert**
**Cabinet BOETTCHER 23, rue La Boétie**
**F-75008 Paris(FR)**

(54) Procédé pour l'exécution de réactions réductrices en métallurgie et produit utilisé.

(57) Procédé pour l'exécution de réactions réductrices en métallurgie et produit utilisé.

Ce procédé consiste à utiliser comme produit réducteur en remplacement total ou partiel du coke ou du charbon de bois, du bois préalablement torréfié en atmosphère neutre entre 200 et 280°C environ.

EP 0 087 353 A1

Procédé pour l'exécution de réactions réductrices
en métallurgie et produit utilisé.

L'invention a pour objet un procédé de valeur
générale utilisable pour l'exécution des réactions réductrices diverses et variées que l'on rencontre en métallurgie.

Ces réactions consistent très fréquemment à partir d'un oxyde d'un métal et à provoquer la combinaison de l'oxygène avec un corps qui a avec lui plus d'affinité que ce métal, dans des conditions déterminées de température. C'est le cas par exemple de la réduction du minerai de fer qui est un minerai oxydé. La réduction de l'oxyde d'étain qui procure l'étain métal en est un autre exemple.

La réduction s'applique aussi à des corps non métalliques comme le silicium que l'on obtient par réduction de la silice à température élevée.

La réduction s'opère le plus couramment par l'action du carbone et souvent aussi par celle de l'oxyde de carbone. En pratique ces corps ne sont pas employés directement; on leur substitue des produits qui les contiennent en majeure partie, ou qui sont aptes à les générer, et qui sont disponibles en quantité importante, à un coût moins élevé que les corps réducteurs purs.

Il a été admis très généralement que les produits utilisables comme précurseurs de corps réducteurs sont le charbon de bois et le coke métallurgique. Encore faut-il reconnaître que l'usage du charbon de bois est très limité en comparaison de celui du coke métallurgique.

Ces produits n'ont pas été retenus en fonction de leur seul coût mais en raison, en premier lieu, de critères techniques qui sont considérés comme significatifs de leur aptitude à leur emploi dans les réactions réductrices. L'un de ces critères, qui est de loin le critère essentiel, est la teneur en carbone puisque c'est ce dernier corps qui opère la réduction ou qui donne facilement naissance à l'oxyde de carbone qui est l'autre grand corps réducteur.

Il est à remarquer que le charbon de bois et le coke métallurgique ont des teneurs en carbone qui sont élevées, et très voisines, de l'ordre de 85%. D'où il a été admis généralement qu'un corps qui a une teneur en carbone relativement basse par rapport à cette valeur de 85%, par exemple une teneur inférieure à 50%, ne satisfait pas à ce critère essentiel et ne convient pas comme corps réactif. Il en est ainsi, a fortiori, pour un corps qui ne contiendrait que 30 à 35% de carbone fixe.

L'invention consiste à avoir compris que le critère de la teneur en carbone n'a pas une importance aussi considérable que celle qui lui a été attribuée jusqu'à présent et que l'on peut employer comme réducteurs d'autres corps relativement pauvres en carbone, à condition que ces corps possèdent un pouvoir calorifique inférieur comparable à celui du charbon de bois et du coke métallurgique.

Comme exemple d'un produit typique conforme à l'invention, capable de remplacer le coke métallurgique, on peut citer le bois torréfié, c'est-à-dire le bois qui a été chauffé en atmosphère neutre à une température comprise entre 200 et 280°C, de préférence à 250°C.

Non seulement le bois torréfié peut remplacer le coke métallurgique mais, de façon surprenante, il est plus avantageux que ce dernier à de nombreux points de vue.

On en détaillera les avantages en même temps que l'on donnera plusieurs exemples de réactions réductrices réalisées à l'aide de bois torréfié conformément à l'invention.

### Réduction de l'oxyde de fer au haut-fourneau

Un minerai de fer de type oligiste a été mélangé dans des proportions définies avec du bois torréfié contenant 33% de carbone fixe. Le calcul de la proportion de bois torréfié par rapport au minerai a été effectué sur la base du carbone fixe, d'après le coke habituellement utilisé, c'est-à-dire que la quantité de coke à 85% de carbone fixe a été remplacée par une quantité 2,58 fois plus grande de bois torréfié, en poids.

Dans ces conditions, les constatations suivantes ont été faites pendant la marche du haut-fourneau :
- pas de difficulté d'écoulement des matières premières dans la partie supérieure du four, pas de reprise d'humidité du réducteur dans cette partie du four ;

- dégagement gazeux supérieur à celui de la marche habituelle au coke, entraînant une meilleure valorisation des gaz combustibles résiduaires, accroissement des volumes de l'ordre de 12 à 14% et augmentation du PCI des gaz de 6 à 8%;

- qualité de la fonte améliorée du fait du faible taux de cendres du réducteur : 7,74 contre 12 avec le coke ;

- fusibilité des scories accrue du fait de la présence de métaux alcalins dans les cendres du bois torréfié.

## Réduction d'un oxyde d'étain

L'oxyde d'étain a été mélangé dans un creuset avec une proportion de bois torréfié telle que l'oxygène présent dans le minerai pouvait être engagé avec le carbone fixe du bois pour donner un mélange $CO + CO_2$ équimoléculaire.

Chauffé à 350°C, le mélange réactionnel a subi une carbothermie spontanée, l'étain liquide se rassemblant au fond du creuset.

Par rapport au charbon de bois, le bois torréfié présente une économie d'emploi qui résulte du prix plus faible du réducteur carboné employé et de la récupération possible de gaz résiduaire à haut pouvoir calorifique.

## Réduction du quartz au four électrique

Un four électrique de 120 Kw a été alimenté en continu par un mélange de quartz et de bois torréfié en proportion telle que la totalité de l'oxygène présent dans le minerai pouvait être engagé par le carbone fixe présent dans le réducteur pour donner de l'oxyde de carbone.

A titre d'exemple, un quartz contenant 99% de $SiO_2$ nécessite, par kilo de minerai, l'emploi de 1,2 kg de bois torréfié contenant 33% de carbone fixe. La production horaire de silicium métal s'est établie à 11 kg environ.

Dans cet emploi, l'emploi du bois torréfié apporte les avantages suivants, par rapport au charbon de bois :

. économie de matière première,

. mélange électriquement plus résistant,

. pas de reprise d'humidité dans la partie supérieure du four,

. meilleure aération du mélange, d'où marche du four plus calme et plus régulière,

. meilleure résistance mécanique de la charge,

. gaz résiduaires mieux valorisables du fait de leur accroissement en volume et en pouvoir calorifique,

. réactivité meilleure de la charge.

Ce dernier point mérite un développement. Une des difficultés rencontrées avec le four électroréducteur à silicium découle de l'existence d'une phase intermédiaire de réduction aboutissant au sous-oxyde de silicium SiO volatile aux températures élevées. Pour éviter son dégagement, et par conséquent une perte de métal, d'énergie et de réducteur, la réduction secondaire du sous-oxyde est indispensable. Comme un four électrique est limité dans sa capacité réactionnelle à sa partie supérieure (parce que les pertes par effet Joule dans l'électrode doivent être les plus faibles possibles), la réactivité du réducteur qui s'y trouve doit être la meilleure possible. A cet égard le bois torréfié s'est révélé avantageux.

Les exemples décrits ci-dessus concernent des réductions de mélanges purs avec du bois torréfié seul. Il est possible d'obtenir des résultats identiques avec des alliages, tels que les ferrosiliciums par exemple, de même qu'il est possible d'obtenir des améliorations partielles par une substitution partielle d'un réducteur traditionnel (coke ou charbon de bois) par du bois torréfié. Le calcul des équivalences d'emploi doit se faire en tenant compte de la teneur en carbone fixe du bois torréfié employé.

De même, un bois plus ou moins torréfié, contenant une teneur en carbone fixe différente de celle citée dans les exemples, convient également, le calcul des équivalences d'emploi se faisant comme indiqué. En pratique, un bois torréfié contient entre 27 et 35% de carbone fixe.

Il est préférable d'employer un véritable bois torréfié, obtenu sans dépassement de la température de 260°C, qui a un pouvoir calorifique inférieur de 5000 kcal/kg (20.900 kJ/kg) au moins, avec une teneur en carbone fixe supérieure à 30 % ainsi qu'une remarquable homogénéité de constitution. Cette homogénéité lui permet de subir avec succès l'essai d'hydroliquéfaction comme expliqué dans la demande numéro EP 82401576,2 du 25 Août 1982 au nom de la demanderesse.

0087353

## REVENDICATIONS

1. Procédé pour l'exécution en métallurgie de réactions réductrices caractérisé en ce qu'on emploie du bois préalablement torréfié à une température comprise entre 200 et 280°C environ, en atmosphère neutre, ayant une teneur en carbone comprise entre 27 et 35% environ, ce bois torréfié étant utilisé comme seul produit réducteur ou en mélange avec d'autres produits réducteurs.

2. Procédé selon la revendication 1 caractérisé en ce que le bois torréfié est employé seul en quantité déterminée, en poids, en fonction de sa teneur en carbone par rapport à la teneur en carbone du coke métallurgique ou du charbon de bois servant habituellement à cette réaction.

3. Produit réducteur remplaçant totalement ou partiellement le coke métallurgique ou le charbon de bois, constitué par du bois torréfié entre 200 et 280°C environ, de préférence à 250°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-A-2 802 213  (F. FINK)<br>* Revendications 1,4; page 8, lignes 1-8 * | 1-3 | C 21 B   13/00<br>C 21 B    5/00<br>C 22 B    5/10<br>C 10 L    5/44 |
| Y | CH-A-  228 877  (M SENEZE)<br>* Revendication I; sous-revendications 1,4 * | 1-3 | |
| Y | FR-A-  953 004  (A. PINEL)<br>* Résumé * | 1-3 | |
| Y | US-A-2 668 105  (F.W. DE JAHN)<br>* Revendications 1-3 * | 1-3 | |
| Y | GB-A-1 021 474  (YWATA IRON & STEEL)<br>* Revendications 1-3 * | 1-3 | **DOMAINES TECHNIQUES RECHERCHES (Int. Cl. ³)** |
| A | US-A-1 565 689  (W.R. VAN SLYKE)<br>* Revendications 1-3; page 1, lignes 96-103 * | 1 | C 21 B<br>C 22 B<br>C 10 L |
| A | DE-A-2 935 544  (MINDERMANN)<br>* Revendications 1,5,6,7 * | 1,2 | |
| E,X | FR-A-2 512 053  (ARMINES)<br>* Revendications 1,2; page 1, lignes 8-18; page 3, lignes 22-26; page 4, lignes 31-37 * | 1-3 | |

Le present rapport de recherche a ete etabli pour toutes les revendications

| Lieu de la recherche<br>LA HAYE | Date d achevement de la recherche<br>26-05-1983 | Examinateur<br>ELSEN D.B.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82